# EUROPEAN PATENT APPLICATION

(11) **EP 4 310 725 A1**
(43) Date of publication of application: **24.01.2024**
(21) Application number: 22790814.2
(22) Date of filing: 29.03.2022
(51) Int. Cl.: G06K 9/00, G06K 9/62

(54) **DEVICE CONTROL METHOD AND ELECTRONIC DEVICE**

(30) Priority: 19.04.2021 CN 202110420844
(71) Applicant: Huawei Technologies Co., Ltd., Longgang Shenzhen, Guangdong 518129 (CN)
(72) Inventor: YANG, Jinian, Shenzhen, Guangdong 518129 (CN); GUO, Haoshuai, Shenzhen, Guangdong 518129 (CN); LI, Hongyu, Shenzhen, Guangdong 518129 (CN); LIU, Hongma, Shenzhen, Guangdong 518129 (CN); ZHANG, Yaqi, Shenzhen, Guangdong 518129 (CN)
(74) Representative: Maiwald GmbH
(86) International application number: PCT/CN2022/083654
(87) International publication number: WO 2022/222705

(57) **Abstract**

A device control method and an electronic device are provided. In the method, a video stream is captured; when it is detected that a front face image of a first user appears in the video stream, a gesture of the first user in the video stream is detected; an operation corresponding to the gesture is recognized; and the operation corresponding to the gesture is performed. In this application, false triggering of the electronic device caused by a user gesture can be reduced.

## Description

### TECHNICAL FIELD

This application relates to the field of intelligent terminal technologies, and in particular, to a device control method and an electronic device.

### BACKGROUND

Currently, when a user controls an electronic device such as a smart television, the user may further perform control by using a gesture in addition to using a remote control.

An electronic device photographs a video stream by using a camera disposed in the electronic device, detects a gesture of a user in a video frame of the video stream, recognizes different gestures of the user as different instructions, and makes corresponding responses, so that the user controls the electronic device by using the gesture. However, such a method for controlling the electronic device by using a user gesture has a relatively high probability of false triggering.

### SUMMARY

This application provides a device control method and an electronic device, to reduce false triggering of the electronic device caused by a user gesture.

According to a first aspect, this application provides a device control method, applied to an electronic device. The device control method includes: capturing a video stream; when it is detected that a front face image of a first user appears in the video stream, detecting a gesture of the first user in the video stream; recognizing an operation corresponding to the gesture; and performing the operation corresponding to the gesture. Compared with a conventional technology in which an electronic device responds to a gesture of a user after recognizing the gesture of the user, in the method, the front face image of the first user is to be detected, and a gesture of the first user whose front face image appears is responded only, to reduce false triggering of the electronic device caused by a user gesture.

In a possible implementation, that it is detected that a front face image of a first user appears in the video stream includes: it is detected that consecutive target video frames in the video stream include the front face image of the first user.

In a possible implementation, that it is detected that consecutive target video frames in the video stream include the front face image of the first user includes: for each target video frame in the consecutive target video frames, obtaining a face image of the first user from the target video frame, calculating a yaw angle of the face image, and determining that the yaw angle is less than a preset first threshold.

In a possible implementation, that it is detected that consecutive target video frames in the video stream include the front face image of the first user further includes: calculating a pitch angle and/or a roll angle of the face image; and determining that the pitch angle is less than a preset second threshold, and/or determining that the roll angle is less than a preset third threshold.

In a possible implementation, before that it is detected that a front face image of a first user appears in the video stream further includes: capturing a first image in response to a face setting instruction; displaying the first image, and indicating a face image in the first image on the displayed first image; and setting, in response to a face selection instruction, a face image indicated by the face selection instruction as the face image of the first user.

In a possible implementation, the method further includes: when it is detected that a front face image of a second user appears in the video stream, detecting a gesture of the second user in the video stream; recognizing an operation corresponding to the gesture of the second user; and performing the operation corresponding to the gesture of the second user.

In a possible implementation, the method further includes: determining that the gesture of the first user and the gesture of the second user in the video stream are detected simultaneously, and selecting one gesture from the gesture of the first user and the gesture of the second user; recognizing an operation corresponding to the selected gesture; and performing the operation corresponding to the selected gesture.

In a possible implementation, the detecting a gesture of the first user includes: detecting, from the consecutive target video frames that include the front face image of the first user, consecutive target video frames that include a hand image of the first user; determining, based on the consecutive target video frames that include the hand image of the first user, a moving track of the hand image of the first user; and determining, based on the moving track of the hand image of the first user, the gesture of the first user.

According to a second aspect, an embodiment of this application provides a device control method, applied to an electronic device, including: capturing a video stream; when it is detected that a front face image of a first user appears in the video stream, detecting a gesture of the first user in the video stream, and determining, based on the front face image of the first user, attribute information and/or emotion information of the first user, where the attribute information is used to record an attribute of the first user, and the emotion information is used to record an emotion of the first user; recognizing an operation corresponding to the gesture; and if the operation is a content recommendation operation, displaying an interface corresponding to the content recommendation operation, where recommended content is displayed on the interface, and the recommended content is obtained based on the attribute information and/or the emotion information of the first user. Compared with a conventional technology in which an electronic device responds to a gesture of a user after recognizing the gesture of the user, in the method, the front face image of the first user is to be detected, and a gesture of the first user whose front face image appears is responded only, to reduce false triggering of the electronic device caused by a user gesture. In addition, content filtering is performed based on attribute information and/or emotion information of a front face frame, to obtain recommended content of the front face frame and display the recommended content, implementing personalized recommendation for the user. This makes the displayed recommended content more targeted, improves interaction effect between the electronic device and the user, and improves user experience.

In a possible implementation, before the displaying an interface corresponding to the content recommendation operation further includes: sending the attribute information and/or the emotion information of the first user to a server; and receiving first information that is sent by the server in response to the attribute information and/or the emotion information, where the first information includes recommended content that matches the attribute information and/or the emotion information.

In a possible implementation, that it is detected that a front face image of a first user appears in the video stream includes: it is detected that consecutive target video frames in the video stream include the front face image of the first user.

In a possible implementation, that it is detected that consecutive target video frames in the video stream include the front face image of the first user includes: for each target video frame in the consecutive target video frames, obtaining a face image of the first user from the target video frame, calculating a yaw angle of the face image, and determining that the yaw angle is less than a preset first threshold.

In a possible implementation, that it is detected that consecutive target video frames in the video stream include the front face image of the first user further includes: calculating a pitch angle and/or a roll angle of the face image; and determining that the pitch angle is less than a preset second threshold, and/or determining that the roll angle is less than a preset third threshold.

In a possible implementation, before that it is detected that a front face image of a first user appears in the video stream further includes: capturing a first image in response to a face setting instruction; displaying the first image, and indicating a face image in the first image on the displayed first image; and setting, in response to a face selection instruction, a face image indicated by the face selection instruction as the face image of the first user.

In a possible implementation, the method further includes: when it is detected that a front face image of a second user appears in the video stream, detecting a gesture of the second user in the video stream; recognizing an operation corresponding to the gesture of the second user; and performing the operation corresponding to the gesture of the second user.

In a possible implementation, the method further includes: determining that the gesture of the first user and the gesture of the second user in the video stream are detected simultaneously, and selecting one gesture from the gesture of the first user and the gesture of the second user; recognizing an operation corresponding to the selected gesture; and performing the operation corresponding to the selected gesture.

In a possible implementation, the detecting a gesture of the first user includes: detecting, from the consecutive target video frames that include the front face image of the first user, consecutive target video frames that include a hand image of the first user; determining, based on the consecutive target video frames that include the hand image of the first user, a moving track of the hand image of the first user; and determining, based on the moving track of the hand image of the first user, the gesture of the first user.

According to a third aspect, an embodiment of this application provides an electronic device, including a processor and a memory. The memory is configured to store a computer program, and when the processor performs the computer program, the electronic device is enabled to perform the method according to any implementation of the first aspect.

According to a fourth aspect, an embodiment of this application provides an electronic device, including a processor and a memory. The memory is configured to store a computer program, and when the processor performs the computer program, the electronic device is enabled to perform the method according to any implementation of the second aspect.

According to a fifth aspect, an embodiment of this application provides a computer-readable storage medium. The computer-readable storage medium stores a computer program. When the computer program is run on a computer, the computer is enabled to perform the method according to any implementation of the first aspect.

According to a sixth aspect, an embodiment of this application provides a computer-readable storage medium. The computer-readable storage medium stores a computer program. When the computer program is run on a computer, the computer is enabled to perform the method according to any implementation of the second aspect.

According to a seventh aspect, this application provides a computer program. When the computer program is executed by a computer, the computer program is used to perform the method according to the first aspect.

In a possible design, all or some of programs in the seventh aspect may be stored in a storage medium that is encapsulated with a processor, or some or all of programs may be stored in a memory that is not encapsulated with a processor.

### BRIEF DESCRIPTION OF DRAWINGS

To describe technical solutions in embodiments of the present invention more clearly, the following briefly describes the accompanying drawings used in describing embodiments. It is clearly that the accompanying drawings in the following descriptions show merely some embodiments of the present invention, and a person of ordinary skill in the art may still derive other drawings from these accompanying drawings without creative efforts.
FIG. 1 is a schematic diagram of a structure of an electronic device according to an embodiment of this application;
FIG. 2 is a block diagram of a software structure of an electronic device according to an embodiment of this application;
FIG. 3A is a schematic diagram of an interface of a smart television according to this application;
FIG. 3B is a schematic diagram of a setting interface of a smart television according to this application;
FIG. 3C is a schematic diagram of an interface of a smart television according to this application;
FIG. 4 is a schematic diagram of an application scenario of a device control method according to this application;
FIG. 5 is a flowchart of an embodiment of a device control method according to this application;
FIG. 6A is a schematic diagram of a standby state of a smart television according to this application;
FIG. 6B is a schematic diagram of an interface after a smart television is turned on according to this application;
FIG. 7A is a schematic diagram of a play image of video 1 according to this application;
FIG. 7B is a schematic diagram of a video selection interface according to this application;
FIG. 8 is a flowchart of another embodiment of a device control method according to this application;
FIG. 9A is a schematic diagram of a human body frame, a face frame, and a hand frame according to this application;
FIG. 9B is a schematic diagram of an establishment method for a pixel coordinate system according to this application;
FIG. 10A is a schematic diagram of a setting interface of a preset face image according to this application;
FIG. 10B is a schematic diagram of a selection interface of a preset face image according to this application;
FIG. 11A is a schematic diagram of an establishment method for a camera coordinate system according to this application;
FIG. 11B is a schematic diagram of an establishment method for a face angle coordinate system according to this application;
FIG. 12 is a flowchart of still another embodiment of a device control method according to this application;
FIG. 13A and FIG. 13B are diagrams of examples of display manners of recommended content according to this application;
FIG. 14A to FIG. 14E are diagrams of examples of display manners of recommended content according to this application; and
FIG. 15 is a diagram of a structure of another embodiment of an electronic device according to this application.

### DESCRIPTION OF EMBODIMENTS

Terms used in embodiments of this application are only used to explain specific embodiments of this application, but are not intended to limit this application.

Currently, a method for controlling an electronic device by using a user gesture has a relatively high probability of false triggering. Specifically, a user makes a gesture in daily life, but the gesture is not made by the user for controlling the electronic device. However, the electronic device recognizes the gesture as an instruction sent by the user for the electronic device, and makes a response, causing false triggering of the electronic device.

Therefore, embodiments of this application provide a device control method and an electronic device, to reduce false triggering of the electronic device caused by a user gesture.

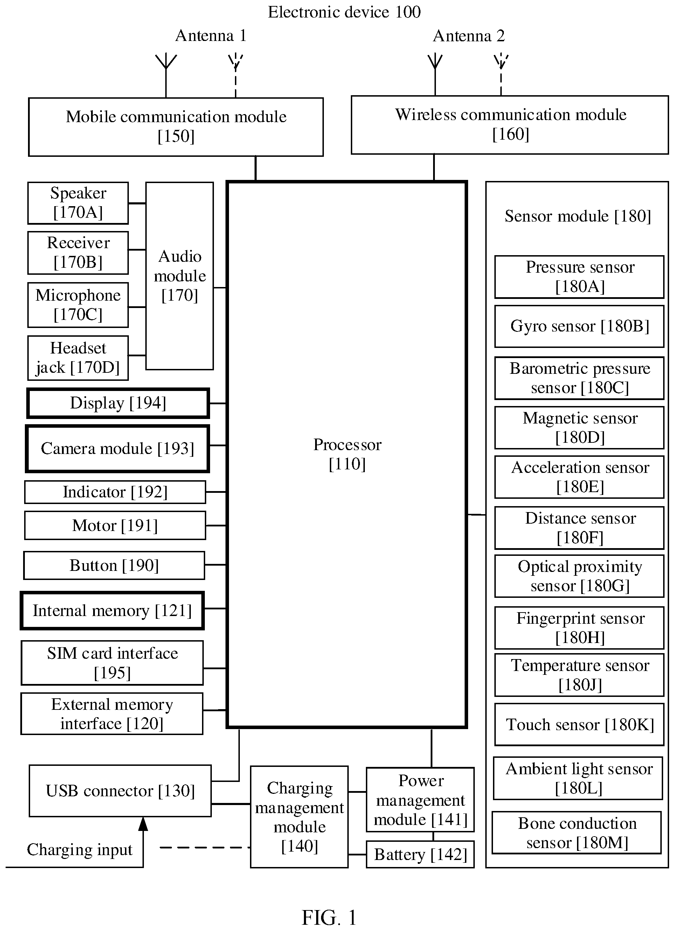

FIG. 1 is a schematic diagram of a structure of an electronic device 100.

The electronic device 100 may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, or a smart city device. A specific type of the electronic device 100 is not specially limited in this embodiment of this application.

The electronic device 100 may include a processor 110, an internal memory 121, a camera module 193, and a display 194. Optionally, if the electronic device 100 is an electronic device that does not have a call function, such as a smart television, the electronic device 100 may further include: an external memory interface 120, a universal serial bus (universal serial bus, USB) connector 130, a charging management module 140, a power management module 141, a battery 142, an antenna 2, a wireless communication module 160, an audio module 170, a speaker 170A, a microphone 170C, a headset jack 170D, a sensor module 180, a button 190, a motor 191, an indicator 192, a subscriber identification module (subscriber identification module, SIM) card interface 195, and the like. If the electronic device 100 is a device that may implement a call, for example, a mobile phone, the electronic device 100 may further include an antenna 1, a mobile communication module 150, a receiver 170B, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on an instruction operation code and a time sequence signal to control instruction fetching and instruction execution.

A memory may be further disposed in the processor 110, and is configured to store instructions and data. In some embodiments, the memory in the processor 110 is a cache memory. The memory may store instructions or data that have been used or that are frequently used by the processor 110. If the processor 110 needs to use the instructions or the data again, the instructions or the data may be directly invoked from the memory. This avoids repeated access, and reduces waiting time of the processor 110, improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules like the touch sensor, the audio module, the wireless communication module, the display, and the camera module by using at least one of the foregoing interfaces.

It may be understood that an interface connection relationship between the modules shown in embodiments of this application is merely an example for description, and does not constitute a limitation on the structure of the electronic device 100. In some other embodiments of this application, an interface connection manner different from an interface connection manner in the foregoing embodiment or a combination of a plurality of interface connection manners may alternatively be used in the electronic device 100.

The USB connector 130 is an interface that conforms to a USB standard specification, and may be configured to connect the electronic device 100 and a peripheral device. The USB connector 130 may be specifically a mini USB connector, a micro USB connector, a USB type-C connector, or the like. The USB connector 130 may be configured to connect to a charger, so that the charger charges the electronic device 100, or may be configured to connect to another electronic device, so that data is transmitted between the electronic device 100 and the another electronic device. The USB connector 130 may alternatively be configured to connect to a headset, and output audio stored in the electronic device by using the headset. The connector may be further configured to connect to another electronic device, for example, a VR device. In some embodiments, standard specifications of the universal serial bus may be USB 1.x, USB2.0, USB3.x, and USB4.

The charging management module 140 is configured to receive a charging input from the charger. The charger may be a wireless charger or a wired charger. In some embodiments of wired charging, the charging management module 140 may receive a charging input from the wired charger by using the USB connector 130. In some embodiments of wireless charging, the charging management module 140 may receive a wireless charging input by using a wireless charging coil of the electronic device 100. The charging management module 140 may further supply power to the electronic device by using the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera module 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution applied to the electronic device 100 including 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), global navigation satellite system (global navigation satellite system, GNSS), frequency modulation (frequency modulation, FM), near field communication (near field communication, NFC), infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled. This enables the electronic device 100 to communicate with a network and another electronic device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or more displays 194.

The electronic device 100 may implement an image shooting function by using the camera module 193, the ISP, the video codec, the GPU, the display 194, the application processor AP, the neural-network processing unit NPU, and the like.

The camera module 193 may be configured to capture color image data and depth data of an object to be photographed. The ISP may be configured to process the color image data captured by the camera module 193. For example, during image shooting, a shutter is pressed, and light is transmitted to a photosensitive element of a camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scene. In some embodiments, the ISP may be disposed in the camera module 193.

In some embodiments, the camera module 193 may include a color camera module and a 3D sensing module.

In some embodiments, a photosensitive element of a camera of the color camera module may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV.

In some embodiments, the 3D sensing module may be a time of flight (TOF) 3D sensing module or a structured light (structured light) 3D sensing module. Structured light 3D sensing is an active depth sensing technology, and basic components of a structured light 3D sensing module may include an infrared (Infrared) transmitter, an IR camera module, and the like. A working principle of the structured light 3D sensing module is to first transmit a light spot of a specific pattern (pattern) to an object to be photographed, and then receive coding of the light spot of the pattern (light coding) on a surface of the object, to compare the light spot with an original projected light spot in terms of a similarity and a difference, and calculate three-dimensional coordinates of the object according to a trigonometric principle. The three-dimensional coordinates include a distance between the electronic device 100 and the object to be photographed. TOF 3D sensing may be an active depth sensing technology, and basic components of the TOF 3D sensing module may include an infrared (Infrared) transmitter, an IR camera module, and the like. A working principle of the TOF 3D sensing module is to calculate a distance (that is, a depth) between the TOF 3D sensing module and an object to be photographed by using an infrared refraction time, to obtain a 3D depth-of-field image.

The structured light 3D sensing module may be further applied to fields such as facial recognition, somatic game console, and industrial machine vision detection. The TOF 3D sensing module may be further applied to fields such as a game console and augmented reality (augmented reality, AR)/virtual reality (virtual reality, VR).

In some other embodiments, the camera module 193 may further include two or more cameras. The two or more cameras may include a color camera, and the color camera may be configured to capture color image data of an object to be photographed. The two or more cameras may capture depth data of an object to be photographed by using a stereo vision (stereo vision) technology. The stereo vision technology is based on a principle of a parallax of human eyes. Under a natural light source, two or more cameras are used to photograph an image of a same object from different angles, and then an operation such as a triangulation method is performed to obtain distance information, that is, depth information, between the electronic device 100 and the object to be photographed.

In some embodiments, the electronic device 100 may include one or more camera modules 193. Specifically, the electronic device 100 may include one front-facing camera module 193 and one rear-facing camera module 193. The front-facing camera module 193 may be generally configured to capture color image data and depth data of a photographer facing the display 194, and the rear-facing camera module may be configured to capture color image data and depth data of an object to be photographed (such as a character or a scenery) facing the photographer.

In some embodiments, a CPU, the GPU, or the NPU in the processor 110 may process color image data and depth data that are captured by the camera module 193. In some embodiments, the NPU may recognize the color image data captured by the camera module 193 (specifically, the color camera module) by using a neural network algorithm to which a skeleton point identification technology is based on, for example, a convolutional neural network (CNN) algorithm, to determine a skeleton point of a character to be photographed. The CPU or the GPU may also run the neural network algorithm to determine the skeleton point of the character to be photographed based on the color image data. In some embodiments, the CPU, the GPU, or the NPU may be further configured to determine a figure (for example, a body proportion and a fatness and thinness degree of a body part between skeleton points) of the character to be photographed based on the depth data captured by the camera module 193 (may be specifically the 3D sensing module) and the recognized skeleton point, further determine a body beautification parameter for the character to be photographed, and finally process a shooting image of the character to be photographed based on the body beautification parameter, so that a body shape of the character to be photographed in the shooting image is beautified. In a subsequent embodiment, how to perform body shaping processing on the image of the character to be photographed based on the color image data and the depth data that are captured by the camera module 193 is described in detail. Details are not described herein again.

The digital signal processor is configured to process a digital signal, and may further process another digital signal. For example, when the electronic device 100 selects a frequency, the digital signal processor is configured to perform Fourier Transform or the like on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. The NPU quickly processes input information with reference to a structure of a biological neural network, for example, a transmission mode between human brain neurons, and may further continuously perform self-learning. The NPU may implement applications such as intelligent cognition of the electronic device 100, for example, image recognition, facial recognition, speech recognition, text understanding, and the like.

The external memory interface 120 may be used to connect to an external memory card, for example, a micro SD card, to extend a storage capability of the electronic device 100. The external memory card communicates with the processor 110 by using the external memory interface 120, to implement a data storage function. For example, files such as music and videos are stored in the external memory card. Alternatively, files such as music and videos are transferred from the electronic device to the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 100. In addition, the internal memory 121 may include a high-speed random access memory, or may include a nonvolatile memory, for example, at least one magnetic disk storage device, a flash memory, a universal flash storage (universal flash storage, UFS), or the like. The processor 110 runs the instructions stored in the internal memory 121 and/or instructions stored in the memory disposed in the processor, to perform various function, methods and data processing of the electronic device 100.

The electronic device 100 may implement an audio function such as music play and recording by using the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may listen to music by using the loudspeaker 170A, or output an audio signal of a hands-free call.

The receiver 170B, also referred to as an "earpiece", is configured to convert an audio electrical signal into a sound signal. When the electronic device 100 answers a call or receives a voice message, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, and recognize a sound source, so as to implement a directional recording function and the like.

The headset jack 170D is configured to connect to a wired headset. The headset jack 170D may be the USB connector 130, or may be a 3.5 mm open mobile terminal platform (open mobile terminal platform, OMTP) standard interface or a cellular telecommunications industry association of the USA (cellular telecommunication industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, a capacitive pressure sensor, and the like. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects touch operation intensity by using the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a motion posture of the electronic device 100. In some embodiments, angular velocities of the electronic device 100 around three axes (which are x, y, and z axes) may be determined by using the gyro sensor 180B. The gyro sensor 180B may be configured to implement image stabilization during image shooting. For example, when the shutter is pressed, the gyro sensor 180B detects an angle at which the electronic device 100 jitters, calculates, based on the angle, a distance for which a lens module needs to compensate, and controls the lens to cancel the jitter of the electronic device 100 through reverse motion, to implement image stabilization. The gyro sensor 180B may further be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. When the electronic device is a foldable electronic device, the magnetic sensor 180D may be configured to detect folding or spreading, or a folding angle, of the electronic device. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in an image shooting scene, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When the detected intensity of the reflected light is greater than the threshold, it may be determined that there is an object near the electronic device 100. When the detected intensity of the reflected light is less than the threshold, the electronic device 100 may determine that there is no object near the electronic device 100. The electronic device 100 may detect, by using the optical proximity sensor 180G, that a user holds the electronic device 100 close to an ear to make a call, to automatically turn off a screen for power saving. The optical proximity sensor 180G may also be used in a smart cover mode or a pocket mode to automatically perform screen unlocking or locking.

The ambient light sensor 180L may be configured to sense ambient light brightness. The electronic device 100 may adaptively adjust brightness of the display 194 based on the sensed ambient light brightness. The ambient light sensor 180L may be further configured to automatically adjust white balance during image shooting. The ambient light sensor 180L may further cooperate with the optical proximity sensor 180G to detect whether the electronic device 100 is blocked, for example, the electronic device is in a pocket. When it is detected that the electronic device is blocked or in the pocket, some functions (for example, a touch function) may be disabled to prevent a misoperation.

The fingerprint sensor 180H is configured to capture a fingerprint. The electronic device 100 may use a feature of the captured fingerprint to implement fingerprint-based unlocking, application lock access, fingerprint-based image shooting, fingerprint-based call answering, and the like.

The temperature sensor 180J is configured to detect temperature. In some embodiments, the electronic device 100 executes a temperature processing policy through the temperature detected by the temperature sensor 180J. For example, when the temperature detected by the temperature sensor 180J exceeds a threshold, the electronic device 100 performs performance reduction on the processor, to reduce power consumption of the electronic device to implement thermal protection. In some other embodiments, when the temperature detected by the temperature sensor 180J is lower than another threshold, the electronic device 100 heats the battery 142. In some other embodiments, when the temperature is lower than still another threshold, the electronic device 100 may boost an output voltage of the battery 142.

The touch sensor 180K is also referred to as a "touch control device". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may be disposed on a surface of the electronic device 100, and is located at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset to be combined into a bone conduction headset. The audio module 170 may parse out a voice signal based on the vibration signal obtained by the bone conduction sensor 180M from the vibration bone of the voice part, to implement a voice function. The application processor may parse heart rate information based on the blood pressure beat signal obtained by the bone conduction sensor 180M, to implement a heart rate detection function.

The button 190 may include a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be used for an incoming call vibration prompt and a touch vibration feedback. For example, touch operations performed on different applications (for example, image shooting, audio play, and the like) may correspond to different vibration feedback effect. The motor 191 may also correspond to different vibration feedback effect for touch operations performed on different regions of the display 194. Different application scenarios (for example, a time reminder, information receiving, an alarm clock, a game, and the like) may also correspond to different vibration feedback effect. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network through a SIM card, implementing functions such as making/answering a call and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a microservices-based architecture, or a cloud architecture. In this embodiment of this application, an Android system with a layered architecture is used as an example to describe a software structure of the electronic device 100.

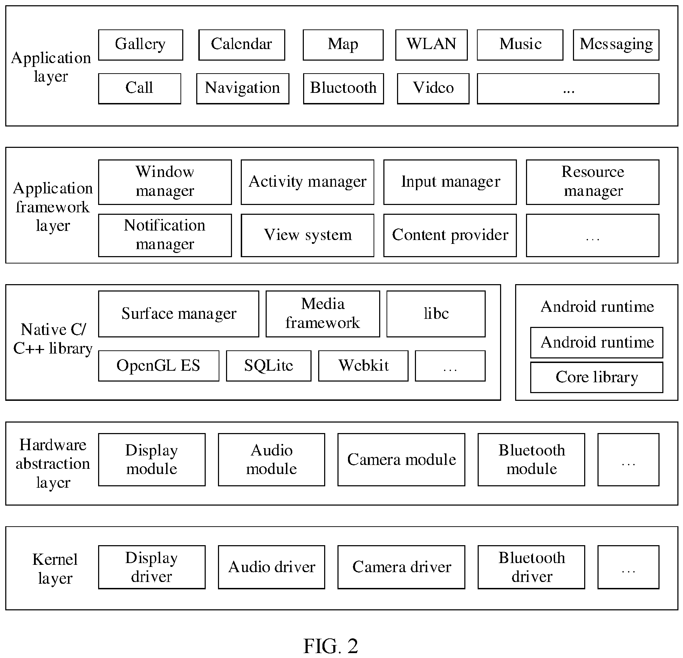

FIG. 2 is a block diagram of the software structure of the electronic device 100 in this embodiment of this application.

In a layered architecture, software is divided into several layers, and each layer has a clear role and task. The layers communicate with each other through a software interface. In some embodiments, the Android system is divided into five layers: an application layer, an application framework layer, an Android runtime (Android runtime, ART) and a native C/C++ library, a hardware abstraction layer (Hardware Abstraction Layer, HAL), and a kernel layer from top to bottom.

The application layer may include a series of application bundles.

As shown in FIG. 2, the application bundles may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, surface management, and as a transit station of an input system.

The content provider is configured to store and obtain data, and enable the data to be accessed by an application. The data may include a video, an image, audio, calls that are made and received, a browsing history, a bookmark, an address book, and the like.

The view system includes visual controls, for example, a control for displaying text, a control for displaying a picture, and the like. The view system may be configured to construct an application. A display interface may include one or more views. For example, a display interface including a short message service message notification icon may include a view for displaying text and a view for displaying a picture.

The resource manager provides various resources for an application, for example, a localized character string, an icon, a picture, a layout file, a video file, and the like.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is made, the electronic device vibrates, the indicator light flashes, or the like.

The activity manager may provide an activity manager service (Activity Manager Service, AMS). The AMS may be used to start, switch, and schedule system components (for example, activities, services, content providers, and broadcast receivers), and manage and schedule application processes.

The input manager may provide an input manager service (Input Manager Service, IMS). The IMS may be used to manage a system input, for example, a touchscreen input, a button input, a sensor input, or the like. The IMS obtains an event from an input device node and allocates the event to a proper window by interacting with the WMS.

The Android runtime includes a core library and an Android runtime. The Android runtime is responsible for converting source code into machine code. The Android runtime mainly includes using an ahead or time (ahead or time, AOT) compilation technology and a just in time (just in time, JIT) compilation technology.

The core library provides a basic Java class library function, for example, a basic data structure library, a mathematics library, an I/O library, a tool library, a database library, a network library, and the like. The core library provides an API for a user to develop Android applications.

The native C/C++ library may include a plurality of function modules. For example, a surface manager (surface manager), a media framework (Media Framework), libc, OpenGL ES, SQLite, Webkit, and the like.

The surface manager is configured to manage a display subsystem, and provide fusion of 2D and 3D layers for a plurality of applications. The media framework supports playback and recording of a plurality of commonly used audio and video formats, static image files, and the like. The media library may support a plurality of audio and video coding formats, for example, MPEG-4, H.264, MP3, AAC, AMR, JPG, PNG, and the like. The OpenGL ES draws and operates 2D and 3D graphics in an application. The SQLite provides a lightweight relational database for an application of the electronic device 100.

The hardware abstraction layer runs in user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

The following describes a working process of software and hardware of the electronic device 100 by using an example with reference to capture of an image shooting scene.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and recognizes a control corresponding to the input event. An example in which the touch operation is a touch-tap operation, and a control corresponding to the tap operation is a control of a camera application icon is used. A camera application invokes an interface of an application framework layer to start the camera application, then starts the camera driver by invoking the kernel layer, and captures a static image or a video by using the camera module 193.

For ease of understanding, in the following embodiments of this application, an electronic device having the structures shown in FIG. 1 and FIG. 2 is used as an example to describe in detail the method provided in an embodiment of this application with reference to the accompanying drawings and application scenarios.

First, a device control method in this application is described by using an example in which the electronic device is a smart television.

The device control method in this application may be used as a function provided by an operating system of the electronic device, or a function provided by a third-party application (application, App) of the electronic device. It is assumed that the function is referred to as an intelligent interaction function, and a user may open, from the operating system or the third-party application, an interface on which the intelligent interaction function is located.

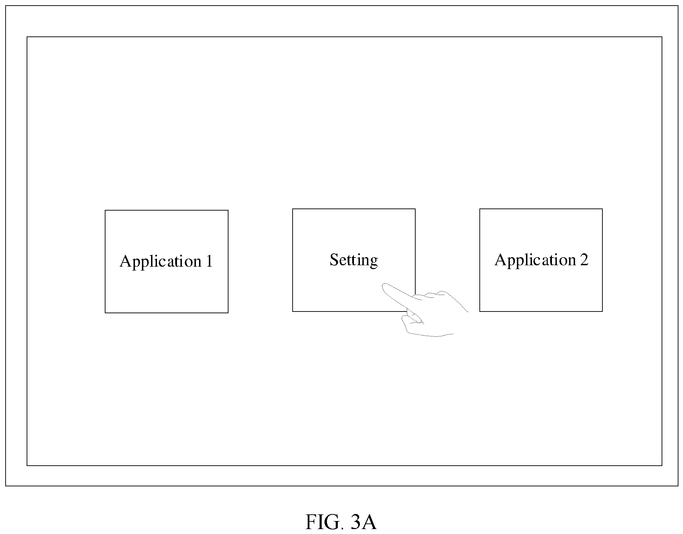

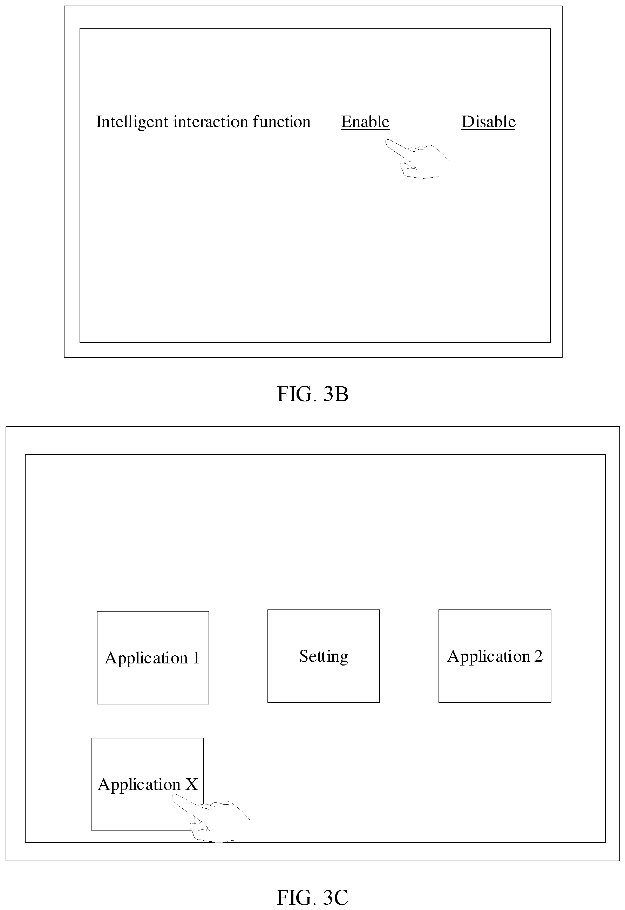

For example, in FIG. 3A, an example in which the intelligent interaction function is the function provided by the operating system is used. The user selects a "setting" control displayed by the smart television, to enter a setting function. In the setting function, the user may find a setting interface provided in the setting function. For example, as shown in FIG. 3B, the setting interface includes an "intelligent interaction function". The user selects an "enable" control corresponding to the "intelligent interaction function" to enable the intelligent interaction function. Correspondingly, the smart television receives an intelligent interaction trigger instruction of the user, and may trigger performance of the device control method in this application.

For example, in FIG. 3C, an example in which the intelligent interaction function is the function provided by a third-party application "application X" is used. The user selects an application icon "application X" displayed by the smart television, to open the application X. In the application X, the user may find a setting interface provided in the application X. For implementation of the setting interface, refer to FIG. 3B. The setting interface includes an "intelligent interaction function". The user selects an "enable" control corresponding to the "intelligent interaction function" to enable the intelligent interaction function. Correspondingly, the smart television receives an intelligent interaction trigger instruction of the user, and may trigger performance of the device control method in this application.

It should be understood that the foregoing is merely a possible implementation in which the smart television triggers execution of the device control method in this application. If the intelligent interaction function is enabled by default in the setting function of the smart television or in the foregoing application X, the smart television may trigger performance of the device control method in this application without requiring the user to perform the above process.

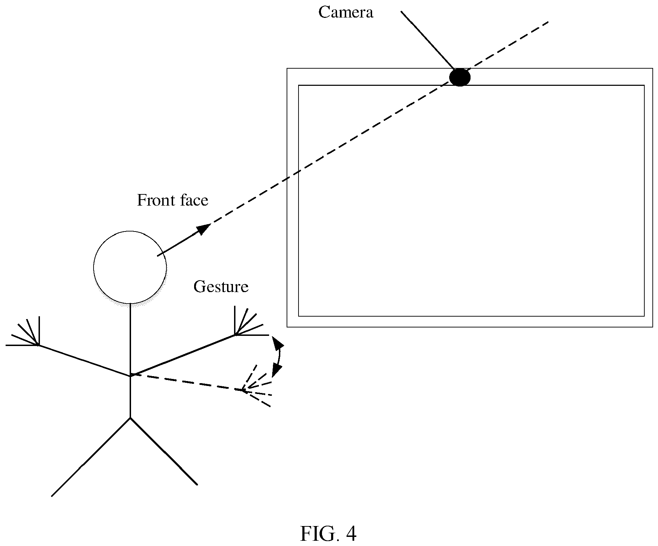

As shown in FIG. 4, the smart television triggers performance of the device control method in this application, and starts a camera to start video shooting, to obtain a video stream. If the user is located in a shooting range of the camera of the smart television, and a front face of the user faces the smart television, preferably, the front face of the user faces the camera of the smart television, and makes a gesture corresponding to a function that the user expects the smart television to perform. Correspondingly, the video stream shot by the camera includes a human body image of the user. The smart television may determine whether a face image in the human body image is a front face image, to determine whether the face of the user faces the smart television. After determining that the face image is the front face image, the smart television recognizes the gesture of the user based on a moving track of a hand image in the human body image.

It should be understood that the camera for shooting the video stream may be a camera built in the electronic device, or may be a camera independent of the electronic device. This is not limited in this application. The camera for shooting the video stream may be disposed in a middle position right above the electronic device. For example, as shown in FIG. 4, a possible disposition position of the camera built in the smart television is a middle position right above the smart television, and an image shooting direction of the camera may be horizontal forward.

A correspondence between a gesture and an operation that may trigger the smart television may be preset in the smart television. The operation that may trigger the smart television may include but is not limited to channel switching, volume adjustment, interface switching, or the like. The smart television recognizes an operation corresponding to the gesture, and performs the operation corresponding to the gesture. For example, assuming that the smart television recognizes that an operation corresponding to the gesture is switching to a home screen, the smart television switches a displayed interface to the home screen.

In the device control method in this embodiment of this application, the electronic device responds only to a gesture made when the front face of the user faces the electronic device. Compared with a conventional technology in which an electronic device responds to a gesture of a user after recognizing the gesture of the user, a process of determining that the front face of the user faces the electronic device is added, reducing false triggering of the electronic device caused by a user gesture.

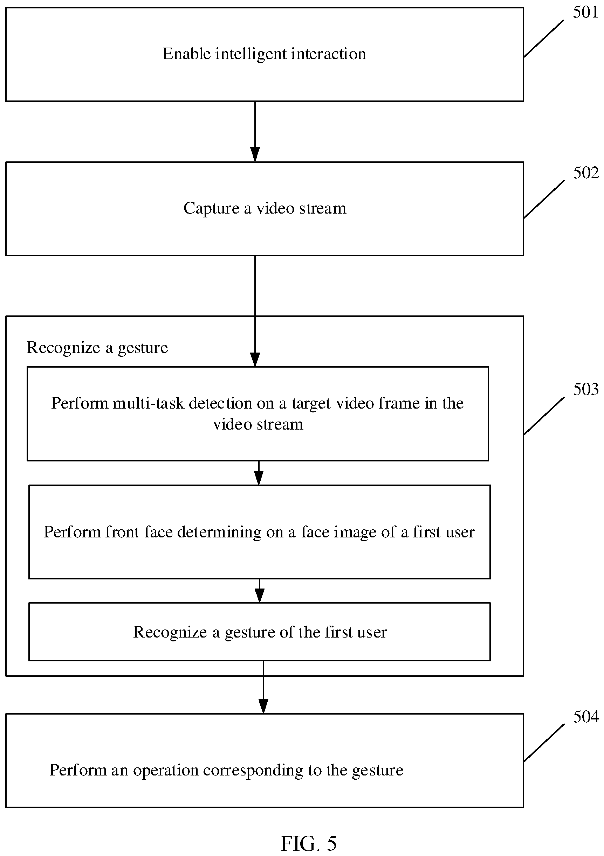

FIG. 5 is a schematic flowchart of the device control method according to this application. The method includes the following steps.

Step 501: The electronic device enables intelligent interaction.

For implementation of this step, refer to FIG. 3A to FIG. 3C and corresponding descriptions thereof. Details are not described herein again. Step 501 is an optional step.

Step 502: The electronic device captures a video stream.

The electronic device may start a camera to perform image shooting, to obtain the video stream.

Step 503: The electronic device recognizes a gesture from the video stream.

This step may include:
performing multi-task detection on a target video frame in the video stream to obtain a human body image, a face image, and a hand image of a first user in the target video frame;
performing front face determining on the face image of the first user in the target video frame; and
recognizing a gesture of the first user based on several consecutive target video frames that are determined by using the front face.

The first user may be a user corresponding to any human body image included in the target video frame, or may be a pre-specified user, for example, a user, an owner, or the like of the electronic device.

Step 504: The electronic device recognizes an operation corresponding to the gesture, and performs the operation corresponding to the gesture.

A correspondence between a gesture and an operation of the electronic device may be preset in the electronic device. For example, assuming that the electronic device is a smart television, a first gesture is corresponding to an operation "returning to a previous page" of the smart television, and a second gesture is corresponding to an operation "turning on the smart television" of the smart television.

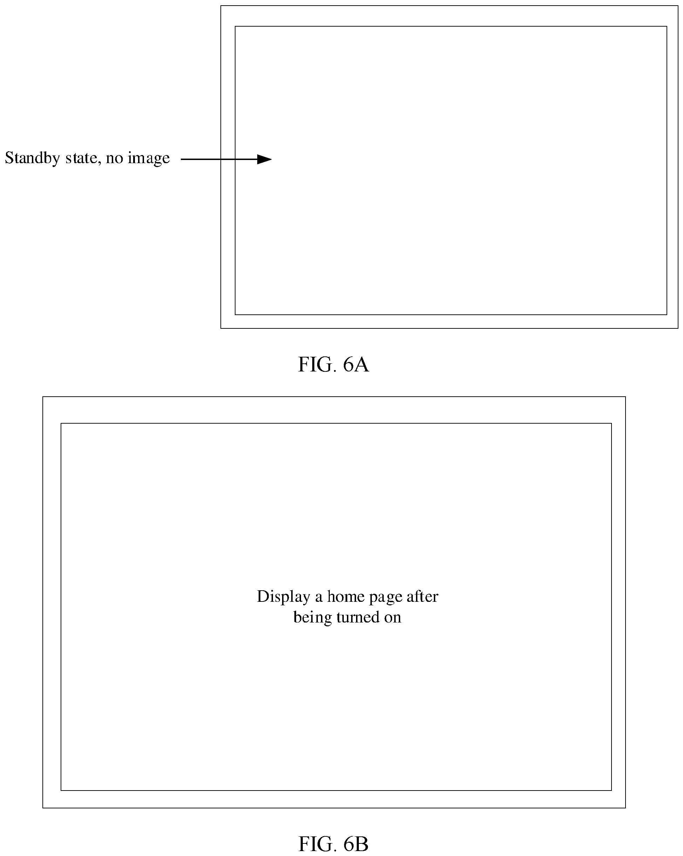

Refer to FIG. 6A. It is assumed that the smart television is in a standby state. If the second gesture is detected in step 503, refer to FIG. 6B. The smart television is turned on, and the smart television displays a home screen after being turned on.

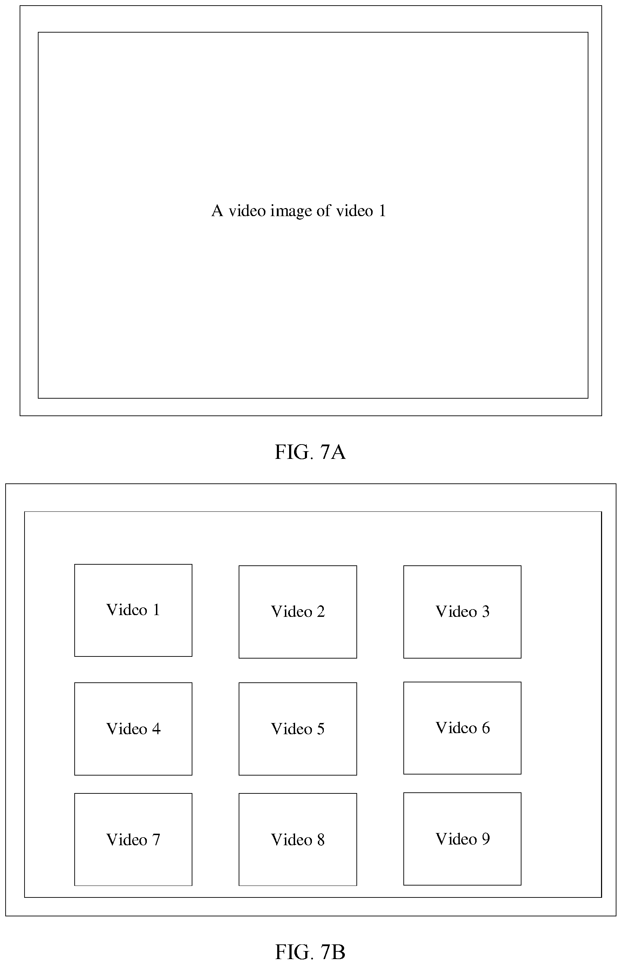

Refer to FIG. 7A. It is assumed that the smart television is playing a video 1. If the first gesture is detected in step 503, the smart television returns to an interface before the video is played, for example, a video selection interface shown in FIG. 7B. The video selection interface displays selection controls corresponding to several videos including the video 1.

In step 503, the electronic device performs front face determining on the face image of the first user in the target video frame, recognizes the gesture of the first user based on the several consecutive target video frames that are determined by using the front face, and performs an operation that matches the gesture. Compared with a conventional technology in which an electronic device responds to a gesture of a user after recognizing the gesture of the user, a process of determining that the front face of the user faces the electronic device is added, reducing false triggering of the electronic device caused by a user gesture.

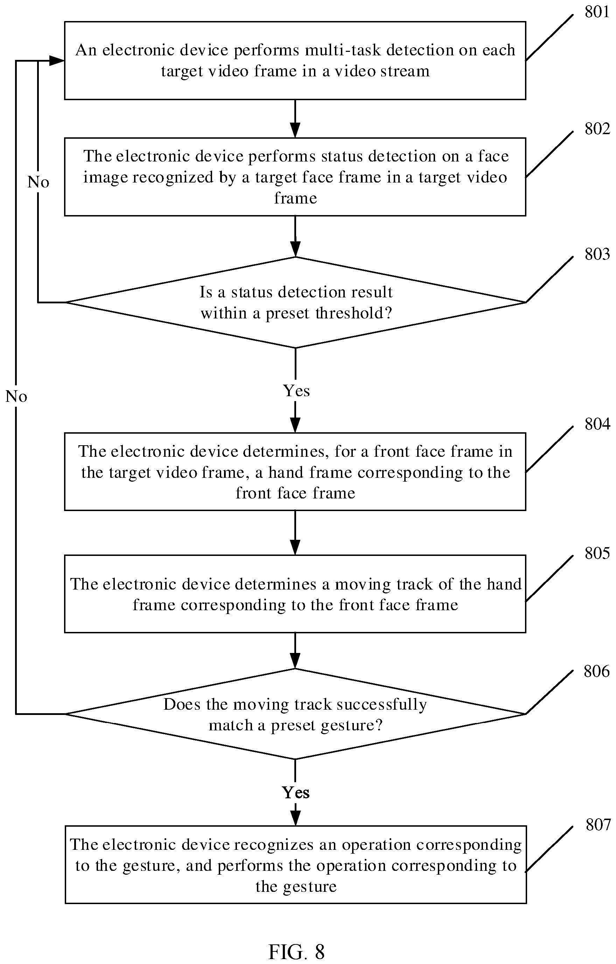

The following describes implementations of step 503 and step 504 in more detail by using FIG. 8. As shown in FIG. 8, the following steps may be included.

Step 801: The electronic device performs multi-task detection on each target video frame in the video stream.

The multi-task detection in this step may include detecting the human body image, the face image, and the hand image from the target video frame, to obtain a human body frame, and a face frame and a hand frame in each human body frame.

The target video frame is a video frame to be processed by the electronic device in the video stream. The electronic device may use each video frame in the video stream as the target video frame. Alternatively, the electronic device may use some video frames in the video stream as the target video frames based on a preset rule. For example, the preset rule may be that there is an interval of one video frame, and the electronic device may use the first, third, fifth, and the like video frames in the video stream as the target video frames.

The human body frame is used to recognize a human body image detected in the target video frame, the face frame is used to recognize a face image detected in the target video frame, and the hand frame is used to recognize a hand image detected in the target video frame.

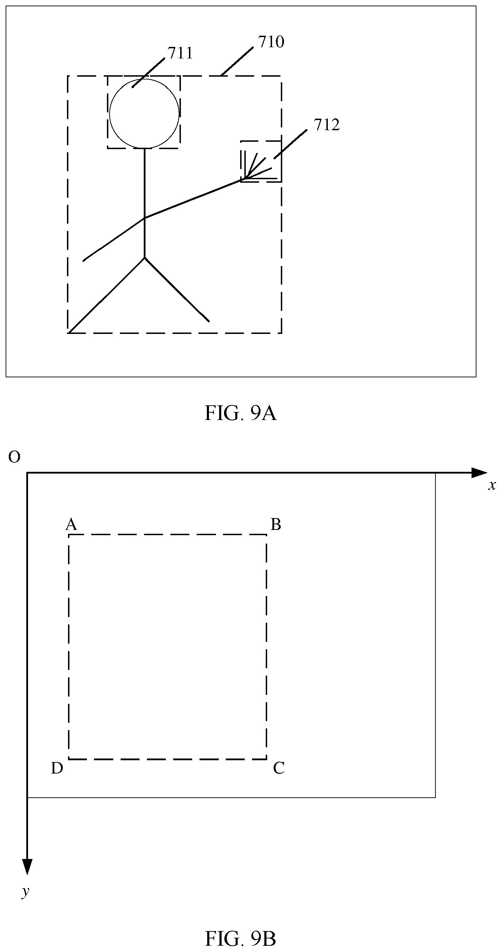

The human body frame may be an outer frame of a human body contour detected in the target video frame, the face frame may be an outer frame of a face contour in the human body frame, and the hand frame may be an outer frame of a hand contour in the human body frame. For example, FIG. 9A shows a human body frame 710, a face frame 711, and a hand frame 712 that are corresponding to a human body image in the target video frame.

In this embodiment of this application, a pixel coordinate system may be established based on the target video frame. For example, as shown in FIG. 9B, a vertex in an upper left corner of the target video frame is used as an origin of the pixel coordinate system from an angle at which the user watches the target video frame. A direction along an upper frame of the target video frame to the right is a positive direction of an x-axis, and a direction along a left frame of the target video frame down is a positive direction of a y-axis. Based on the pixel coordinate system, the electronic device may determine coordinates of each pixel in the target video frame in the pixel coordinate system, referred to as pixel coordinates.

The human body frame, the face frame, and the hand frame may be rectangular frames. The electronic device may record a rectangular frame by using pixel coordinates of a diagonal vertex of the rectangular frame. For example, for a rectangular frame ABCD shown in FIG. 9B, the rectangular frame ABCD may be recorded by using pixel coordinates of a diagonal vertex AC or BD.

A pre-trained first model used to detect the human body frame, the face frame, and the hand frame may be preset in the electronic device. An input of the first model is the target video frame, and an output of the first model is a human body frame, a face frame, and a hand frame that are corresponding to each human body image included in the target video frame. During training of the first model, a training sample may be several images including a human body image. The human body frame is marked in the image, and a face frame and a hand frame in each human body frame are marked. A deep learning network, for example, a convolutional neural network (Convolutional Neural Network, CNN) is preset. The training sample is input into the deep learning network for model training, to obtain the first model.

A quantity of human body frames that may be detected by the electronic device from one target video frame is related to a quantity of human body images actually included in the target video frame, and may be 0, 1, or more.

The following step 802 and step 803 are used to implement front face determining, by the electronic device, of a target face frame.

The front face determining is used to determine that a face in the target face frame is a front face facing the electronic device, that is, determine that a face image in the target face frame is a front face image.

The target face frame may be a face frame that includes a preset face image in a face frame detected in the target video frame, or may be each face frame detected in the target video frame.

If the target face frame is the face frame that includes a preset face image in the face frame, the electronic device may preset a face image. Therefore, in this step, the electronic device first determines that there is a face frame that includes the preset face image in the face frame detected in the target video frame, to obtain the target face frame, and then performs front face determining on the target face frame.

If the target face frame is each face frame detected in the target video frame, the electronic device may sequentially use each face frame as the target face frame to perform front face determining.

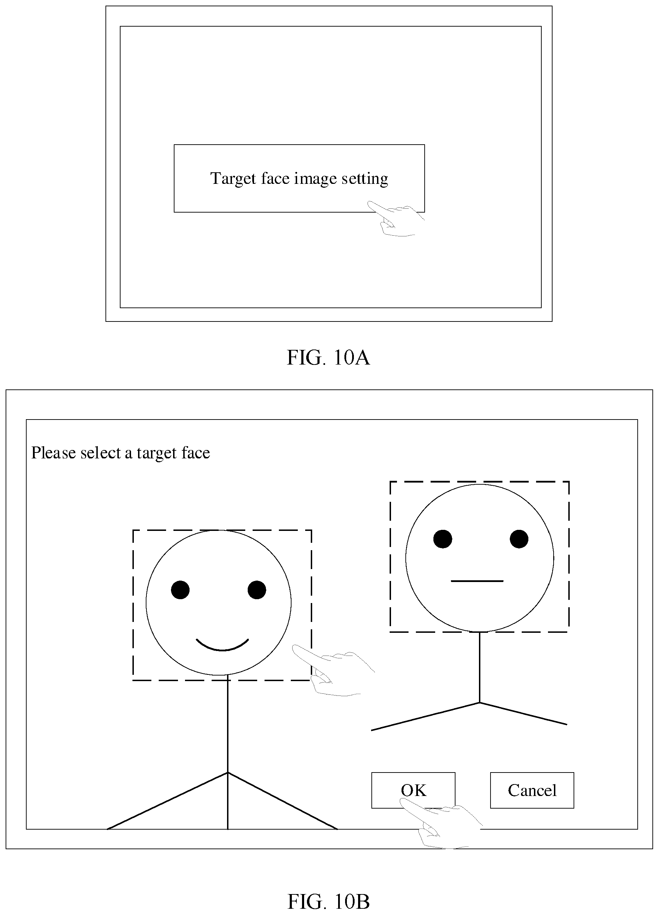

A process of presetting a face image in the electronic device may be completed before this step is performed. In a possible implementation, the user may preset a target face image for the electronic device before triggering the intelligent interaction function. One or more target face images may be preset for the electronic device. A specific quantity of the target face images is not limited in this application. The target face image may be a face image of an owner of the electronic device, or a face image of a user who frequently uses the electronic device. The electronic device may provide a setting interface of the target face image for the user. For example, as shown in FIG. 10A, a "target face image setting" control is displayed in the setting interface. The user taps the "target face image setting" control in the electronic device, and the electronic device enables the camera and displays a selection interface of the target face image. For example, as shown in FIG. 10B, the electronic device displays, on the selection interface of the target face image, an image taken by the camera, and identifies several detected face images in the image. The face images may be identified by using the face frame. The user may select one face image from the face frames as the target face image. Correspondingly, the electronic device receives a face selection instruction of the user, and sets a face image indicated by the face selection instruction as the target face image. It should be noted that the user may enter the setting interface of the target face image at any time, and perform an editing operation such as adding, modifying, or deleting the target face image. This is not limited in this application.

Step 802: The electronic device performs status detection on the face image identified by the target face frame in the target video frame.

The status detection is used to detect a degree to which the face image is a front face image, that is, a degree to which the front face in the face image faces the electronic device. A status detection result may include a yaw angle of the face image. Preferably, to improve accuracy of front face determining in subsequent steps, the status detection result may further include a pitch angle and/or a roll angle of the face image. For example, in FIG. 8, an example in which the status detection result includes the yaw angle, the pitch angle, and the roll angle of the face image is used.

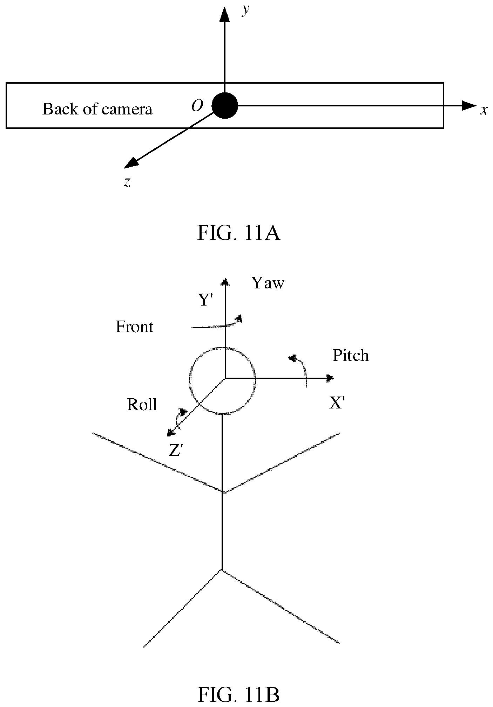

Refer to FIG. 11A. A camera coordinate system may be established in advance. For example, in FIG. 11A, a physical central point of the camera is used as an origin. A direction that passes through the origin and that is horizontally pointing to a back of the camera is used as a positive direction, and a user watching direction is consistent with the positive direction. A direction that passes through the origin and that is horizontally pointing to the left is used as a positive direction ox of an x-axis, a direction that passes through the origin and that is horizontally upward is used as a positive direction oy of a y-axis, and a direction that passes through the origin and that is horizontally pointing forward toward the back of the camera is used as a positive direction oz of a z-axis.

Refer to FIG. 11B. A face angle coordinate system may be established in advance. In FIG. 11B, a central point of a head of a person is used as an origin o. From a perspective of the person facing the front, a direction that passes through the origin and that is horizontally pointing to the left is a positive direction ox' of an x-axis, a direction that passes through the origin and that is vertically upward is a positive direction oy' of a y-axis, and a direction that passes through the origin and that is horizontally pointing to the front is a positive direction oz' of a z-axis. The pitch angle refers to a rotation angle Pitch along ox', the roll angle refers to a rotation angle Roll along oz', and the yaw angle refers to a rotation angle Yaw along oy'.

Because the face angle coordinate system and the camera coordinate system have only a translation relationship, angle values of a pitch angle, a roll angle, and a yaw angle of a face image that are obtained through calculation based on the face angle coordinate system remain unchanged when the pitch angle, the roll angle, and the yaw angle of the face image are converted into the camera coordinate system. Therefore, the angle values of the face image obtained through calculation based on the face angle coordinate system may indicate a degree to which the face image in the video frame taken by the camera is a front face image.

An angle regression model may be preset in the electronic device. The angle regression model is used to detect a pitch angle, a roll angle, and a yaw angle of a face image. An input of the angle regression model is the face image, and an output of the angle regression model is the pitch angle, the roll angle, and the yaw angle of the face image. The electronic device may intercept the face image in the target face frame from the target video frame, and input the face image into the preset angle regression model, to obtain the pitch angle, the roll angle, and the yaw angle of the face image. The angle regression model may be obtained through pre-training. A training method may include: using a face image marked with a pitch angle, a roll angle, and a yaw angle as a sample, where an initial model may be a convolutional neural network (Convolutional Neural Network, CNN), and inputting the sample into the initial model for training. The initial model may learn key facial features in the face image, for example, a distance between two eyebrows, a position of a nose in the face image, and a position of a mouth in the face image, to obtain the angle regression model.

Step 803: The electronic device determines whether the status detection result of the target face frame is within a preset threshold.

If the status detection result of the target face frame includes only the yaw angle, this step may include: the electronic device determines that the yaw angle of the face image in the target face frame is less than a preset first threshold.

If the status detection result of the target face frame further includes the pitch angle and/or the roll angle of the face image, this step may further include: the electronic device determines that the pitch angle of the face image in the target face frame is less than a preset second threshold, and/or determines that the roll angle of the face image in the target face frame is less than a preset third threshold.

The first threshold, the second threshold, and the third threshold are conditions for determining whether the face image in the target face frame is the front face image. Specific values of the first threshold, the second threshold, and the third threshold are not limited in this embodiment of this application. A smaller threshold indicates a higher degree to which a face in the target face frame faces the electronic device. For example, values of the first threshold, the second threshold, and the third threshold may be respectively 15 degrees.

If there are a plurality of target face frames in the target video frame, in this step, the foregoing determining is sequentially performed on each target face frame. That the electronic device determines that a status detection result of at least one target face frame in the target video frame is within a corresponding threshold indicates that a face image in the target face frame is a front face image, and step 804 is performed, or if a face image in the target face frame is not a front face image, step 801 is returned to, and the electronic device processes a next target video frame.

For ease of description, a target face frame in which a face image is a front face image included in this step is referred to as a front face frame in the following.

Step 804: The electronic device determines, for a front face frame in the target video frame, a hand frame corresponding to the front face frame.

The hand frame corresponding to the front face frame is a hand frame that belongs to a same human body frame as the front face frame. For example, a face frame 711 and a hand frame 712 in FIG. 9A are a face frame and a hand frame that belong to a same human body frame. Therefore, a hand frame corresponding to the face frame 711 is the hand frame 712.

Step 805: The electronic device determines a moving track of the hand frame corresponding to the front face frame.

The following describes a method for determining a moving track of the first hand frame by referring to any front face frame in the target video frame in this step as a first front face frame, and referring to a hand frame corresponding to the first front face frame as a first hand frame. This step may include:
the electronic device obtains several consecutive first target video frames, where the first target video frames include a second target video frame and a third target video frame, the second target video frame is a target video frame to which the first front face frame belongs in step 405, the third target video frame is a target video frame before the second target video frame, the third target video frame includes a second front face frame, and the second front face frame is a front face frame that matches the first front face frame;
the electronic device obtains several consecutive fourth target video frames from the third target video frame, where the fourth target video frame includes a second hand frame, and the second hand frame is a hand frame that matches the first hand frame; and
the electronic device determines, based on pixel coordinates of the first hand frame in the second target video frame and pixel coordinates of the second hand frame in the fourth target video frame, the moving track of the first hand frame.

An example of a method for determining that a target video frame includes the second front face frame is as follows:

A front face frame whose specified point has a minimum distance from a specified point of the first front face frame is obtained from a front face frame of the target video frame; and if the distance corresponding to the front face frame is less than a preset threshold, the front face frame is a front face frame that matches the first front face frame, that is, the second front face frame; or if the distance corresponding to the front face frame is not less than a preset threshold, the target video frame does not include the second front face frame. The specified point of the front face frame of the target video frame and the specified point of the first front face frame are points at a same position in a face frame. The distance between the two specified points may be calculated based on pixel coordinates of the two specified points.

An upper limit may be set for a quantity of first target video frames obtained by the electronic device, that is, a maximum quantity of the first target video frames obtained each time. For example, assuming that the maximum quantity is 5, the electronic device obtains a maximum of five first target video frames.

An example of a method for determining that a target video frame includes the first hand frame is as follows:

A hand frame whose specified point has a minimum distance from a specified point of the first hand frame is obtained from a hand frame of the target video frame; and if the distance corresponding to the hand frame is less than a preset threshold, the hand frame is the second hand frame; or if the distance corresponding to the hand frame is not less than a preset threshold, the target video frame does not include the second hand frame. The specified point of the hand frame of the target video frame and the specified point of the first hand frame are points at a same position in a hand frame. The distance between the two specified points may be calculated based on pixel coordinates of the two specified points.

The moving track of the first hand frame may be determined based on pixel coordinates of a specified point of the first hand frame and a specified point of the second hand frame in each target video frame, where the specified point may be any point in a hand frame, preferably a vertex, a central point, or the like of the hand frame. The specified point of the first hand frame and the specified point of the second hand frame are points in a same position in a hand frame.

It should be noted that the first target video frame may be a target video frame that does not trigger a function. To be specific, if the electronic device has implemented recognition of a gesture instruction based on a face frame and a hand frame in a target video frame, and triggered an operation, the target video frame is no longer used as a first target video frame corresponding to the face frame.

Step 806: The electronic device matches the moving track of the hand frame with a preset gesture; and if a moving track of one hand frame successfully matches a preset gesture, step 807 is performed, or if a moving track of one hand frame does not successfully match a preset gesture, step 801 is returned to, and the electronic device processes a next target video frame.

Different gestures may be preset in the electronic device. For a user, the gesture may be embodied as a left-right wave, an up-down wave, or the like of the user. For the electronic device, the gesture may be represented as a feature of a moving track. For example, the first gesture may be set to a left-right width of the moving track reaches a first multiple of a reference width, and the second gesture may be set to an up-down height of the moving track reaches a second multiple of a reference height and the like.

That the electronic device matches the moving track of the first hand frame with a preset gesture may include:
the electronic device calculates the reference width based on a width of the first hand frame; and
if it is determined that a width between left and right boundary points of the moving track of the first hand frame reaches the first multiple of the reference width, the moving track of the first hand frame matches a first preset gesture.

The foregoing calculation of the reference width may be implemented by calculating an average value or a median of the widths of the first hand frame.

A specific value of the first multiple is not limited in this embodiment of this application, and is related to a range of motion of the left-right wave of the user required by the electronic device. A larger first multiple indicates a larger range of motion of the left-right wave of the user required by the electronic device, so that a gesture of the left-right wave of the user can be detected.

Alternatively, that the electronic device matches the moving track of the first hand frame with a preset gesture may include:
the electronic device calculates the reference height based on a height of the first hand frame; and
if it is determined that a height between upper and lower boundary points of the moving track of the first hand frame reaches the second multiple of the reference height, the moving track of the first hand frame matches a second preset gesture.

The foregoing calculation of the reference height may be implemented by calculating an average value or a median of the heights of the first hand frame.

A specific value of the second multiple is not limited in this embodiment of this application, and is related to a range of motion of the up-down wave of the user required by the electronic device. A larger second multiple indicates a larger range of motion of the up-down wave of the user required by the electronic device, so that a gesture of the up-down wave of the user can be detected.

Step 807: The electronic device recognizes an operation corresponding to the gesture, and performs the operation corresponding to the gesture.

It should be noted that, if each face frame in the target video frame is determined as the target face frame in step 802, a plurality of face frames may be front face frames in step 803. Correspondingly, a plurality of gestures corresponding to the front face frames may be obtained in step 806. If the electronic device sequentially performs the foregoing steps on each face frame in the target video frame based on a procedure shown in FIG. 8, and if there are a plurality of front face frames in face frames of the target video frame, a gesture corresponding to each front face frame may be sequentially recognized, and an operation corresponding to the gesture is performed. For example, assuming that there are a front face frame 1 and a front face frame 2 in the target video frame, a gesture 1 corresponding to the front face frame 1 may be first recognized, and an operation 1 corresponding to the gesture 1 is performed, then, a gesture 2 corresponding to the front face frame 2 is recognized, and an operation 2 corresponding to the gesture 2 is performed. If the electronic device performs the foregoing steps for a plurality of face frames in parallel, and if there are a plurality of front face frames in the face frames of the target video frame, and the electronic device simultaneously recognizes gestures corresponding to the plurality of front face frames, a gesture corresponding to one front face frame may be selected from the face frames, and an operation corresponding to the gesture is performed. Whether a gesture corresponding to which specific front face frame is selected, that is, whether a gesture corresponding to which user is selected for response, is not limited in this application. For example, if there is a front face frame that includes the preset face image in the front face frame, an operation corresponding to a gesture of the front face frame is selected to be performed. If there is no front face frame that includes the preset face image in the front face frame, a gesture with an earlier start moment in a plurality of gestures may be selected. To be specific, a gesture corresponding to consecutive target video frames with an earlier start target video frame in the consecutive target video frames corresponding to the plurality of gestures may be selected.

In another embodiment provided in embodiments of this application, based on the foregoing method, an electronic device further detects attribute information and/or emotion information of a front face frame. If an operation corresponding to performing a gesture of a user is displaying an interface, and recommended content is displayed on the displayed interface, the recommended content may be obtained based on the attribute information and/or the emotion information of the front face frame. Therefore, the recommended content is more targeted, interaction effect between the electronic device and the user is improved, and user experience is improved.

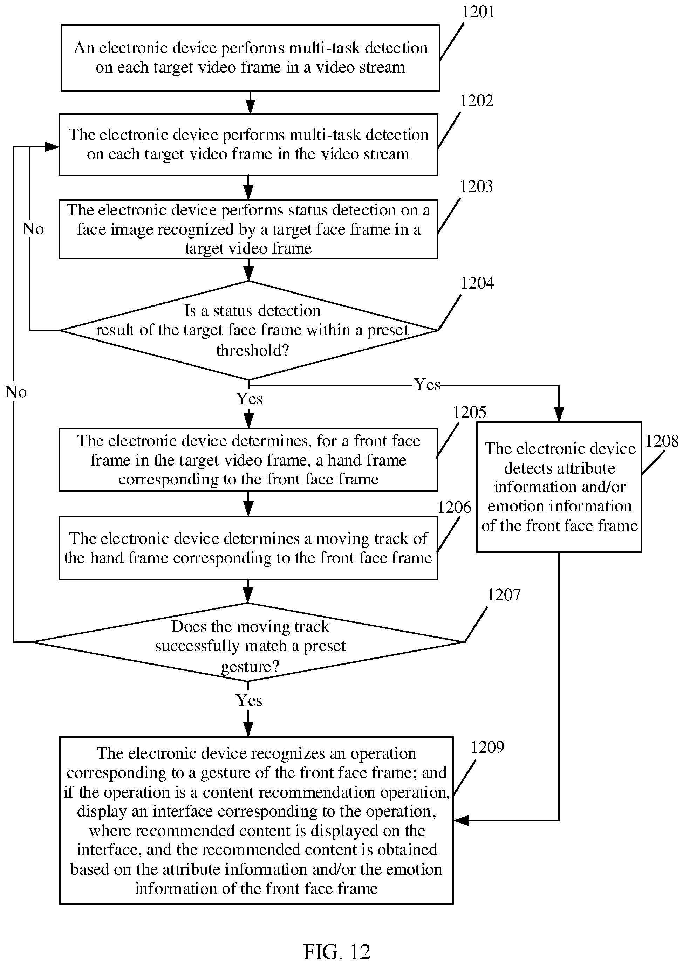

As shown in FIG. 12, the method may include the following steps.

Step 1201: The electronic device captures a video stream.

Step 1202: The electronic device performs multi-task detection on each target video frame in the video stream.

Step 1203: The electronic device performs status detection on a face image identified by a target face frame in a target video frame.

Step 1204: The electronic device determines whether a status detection result of the target face frame is within a preset threshold.

If there is one target face frame in the target video frame, in this step, that the electronic device determines that the status detection result of the target face frame is within a corresponding threshold indicates that a face image in the target face frame is a front face image, and steps 1205 and 1208 are performed, or if a face image in the target face frame is not a front face image, step 1202 is returned to, and the electronic device processes a next target video frame.

If there are a plurality of target face frames in the target video frame, in this step, the foregoing determining is sequentially performed on each target face frame. For each target face frame, if the electronic device determines that the status detection result of the target face frame is within a corresponding threshold, it indicates that a face image in the target face frame is a front face image, and step 1205 is performed, or if a face image in the target face frame is not a front face image, determining in this step is performed on a next target face frame. If determining results of all target face frames are no, step 1202 is returned to, and the electronic device processes a next target video frame.

Step 1205: The electronic device determines, for a front face frame in the target video frame, a hand frame corresponding to the front face frame.

Step 1206: The electronic device determines a moving track of the hand frame corresponding to the front face frame.

Step 1207: The electronic device matches the moving track of the hand frame with a preset gesture, and if a moving track of a hand frame successfully matches the preset gesture, step 1209 is performed, or if no matching is successful, step 1202 is returned to, and the electronic device processes a next target video frame.

Step 1208: The electronic device detects the attribute information and/or the emotion information of the front face frame, and performs step 1209.

Step 1209: The electronic device recognizes an operation corresponding to a gesture of the front face frame, and if the operation is a content recommendation operation, display an interface corresponding to the operation, where recommended content is displayed on the interface, and the recommended content is obtained based on the attribute information and/or the emotion information of the front face frame.

For implementation of step 1201 to step 1207, refer to corresponding descriptions in the foregoing embodiment. Details are not described herein again.

Descriptions of step 1208 are as follows.

A second model used to detect emotion information of a face may be preset in the electronic device. An input of the second model may be a face image, for example, a face image in the front face frame, and an output of the second model is a probability value of a possible value of the emotion information. For example, a value of the emotion information is preset to be: happy, angry, sad, neutral, surprise, aversive, and fear, and a probability value of each value is output. Correspondingly, an emotion value with a highest probability value is used as the emotion information of the face output by the second model. For example, assuming that after a face image is input into the second model, a probability value of happy is the highest in probability values corresponding to values of emotion information output by the second model, emotion information of the face image is happy. During training of the second model, a training sample may be a face image marked with a value of the emotion information, and the training sample is input into a preset deep learning network for training, to obtain the second model.

A third model used to detect attribute information of a face may be preset in the electronic device. An input of the third model may be a face image, for example, a face image in the front face frame, and an output of the third model is a probability value of a possible value of the attribute information. For example, the attribute information may be preset to include a gender and an age range, where a value of the gender may be male or female, and a value of the age range may be children, young adults, middle-aged adults, or old-aged adults. During training of a second model, a training sample may be a face image marked with a value of the attribute information, and the training sample is input into a preset deep learning network for training, to obtain the third model.

Based on the preset model, the face image in the front face frame is input into the second model and/or the third model, to obtain the attribute information and/or the emotion information of the front face frame.

Descriptions of step 1209 are as follows.

A correspondence between a gesture and an operation of the electronic device may be preset in the electronic device. Correspondingly, in this step, the operation corresponding to the gesture may be recognized based on the correspondence. For example, assuming that the electronic device is a smart television, an operation that may trigger the smart television may include but is not limited to channel switching, volume adjustment, interface switching, or the like. If an interface is displayed after the electronic device performs an operation, and recommended content is displayed on the interface, the operation is referred to as the content recommendation operation in this application. It should be noted that, in addition to the recommended content, the displayed interface may further display other content. This is not limited in this application.

In step 1209, if the operation corresponding to the gesture is the content recommendation operation, and the interface displayed after the operation is performed has a control for displaying recommended content, the electronic device performs recommended content filtering based on the attribute information and/or the emotion information of the front face frame, to obtain recommended content corresponding to the front face frame, and displays the recommended content on the interface.

In a possible implementation, the recommended content may be obtained only based on attribute information and/or emotion information of a front face frame corresponding to an operation. For example, if the electronic device recognizes an operation corresponding to a gesture of a front face frame 1 and displays an interface corresponding to the operation, recommended content displayed on the interface may be obtained only based on attribute information and/or emotion information of the front face frame 1.

In another possible implementation, the recommended content may be obtained based on attribute information and/or emotion information of a plurality of front face frames in a same target video frame. For example, if the electronic device recognizes the operation corresponding to the gesture of the front face frame 1, and displays the interface corresponding to the operation, the electronic device determines whether there is another front face frame in the target video frame in which the front face frame 1 is located. If the front face frame 1 and a front face frame 2 are recognized in the target video frame in which the front face frame 1 is located, recommended content displayed on the interface may be obtained based on attribute information and/or emotion information that is of the front face frame 1 and of the front face frame 2. In a possible implementation, another front face frame located in a same target video frame with a front face frame corresponding to an operation may be a front face frame whose gesture is not recognized. The recommended content may be obtained based on the front face frame corresponding to the operation provided that the another front face frame is located in a same target video frame with the front face frame corresponding to the operation.

The recommended content may include but is not limited to the music and the video shown in FIG. 12, for example, may further include news or the like.

The following describes how does the electronic device perform content filtering based on the attribute information and/or the emotion information of the front face frame to obtain recommended content of the front face frame when an operation performed by the electronic device includes displaying the recommended content.

A content library may be preset in the electronic device. The content library includes several pieces of content. Several labels may be set for each piece of content in the content library. The labels record attribute information or emotion information corresponding to the pieces of content.

Correspondingly, the electronic device may search, based on the attribute information and/or the emotion information of the front face frame, for content whose label matches the attribute information and/or the emotion information of the front face frame, and use the found content as the recommended content corresponding to the front face frame.

For example, the electronic device stores n pieces of content, and attribute labels and emotion labels are separately set. An attribute label records a facial attribute corresponding to content, and an emotion label records a facial emotion corresponding to the content, as shown in Table 1.

**Table 1**

| Content | Gender attribute label | Age attribute label | Emotion label |
|---|---|---|---|
| Content 1 (for example, inspiring dramas and inspiring songs) | Male | Old-aged adults, middle-aged adults, and young adults | Sad |
| Content 2 (for example, variety shows and leisure songs) | Female | Middle-aged adults and young adults | Happy |
| Content 3 (for example, period dramas and opera) | Male and female | Old-aged adults and middle-aged adults | Happy and neutral |
| Content 4 (for example, animations for boys and children's songs) | Male | Children | Happy and neutral |
| Content 5 (for example, animations for girls and children's songs) | Female | Children | Happy and neutral |

If the attribute information of the front face frame is female and children, and the emotion information is angry, content 2 is filtered out and used as the recommended content of the front face frame. If the attribute information of the front face frame is male and young adults, and the emotion information is happy, content 1 is filtered out and used as the recommended content of the front face frame.

In another possible implementation, the content library may be disposed in a server, so that the server may complete filtering of the recommended content. In this case, the electronic device may be connected to the server, the electronic device sends the attribute information and/or the emotion information of the front face frame to the server, and the server performs content filtering to obtain recommended content corresponding to the front face frame, and sends the recommended content corresponding to the front face frame to the electronic device.

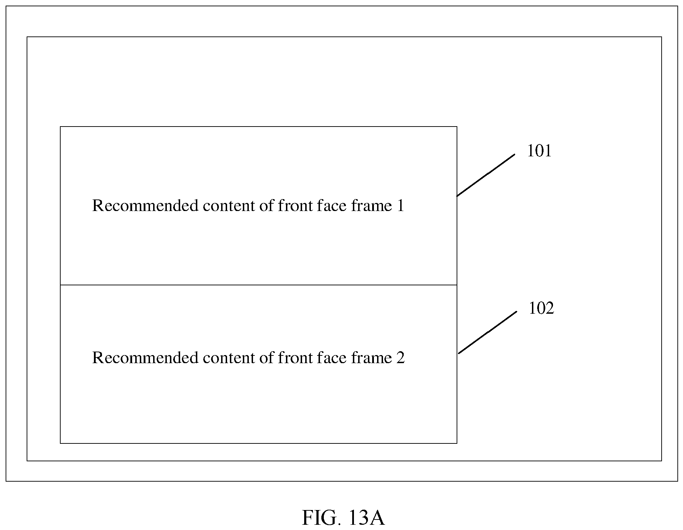

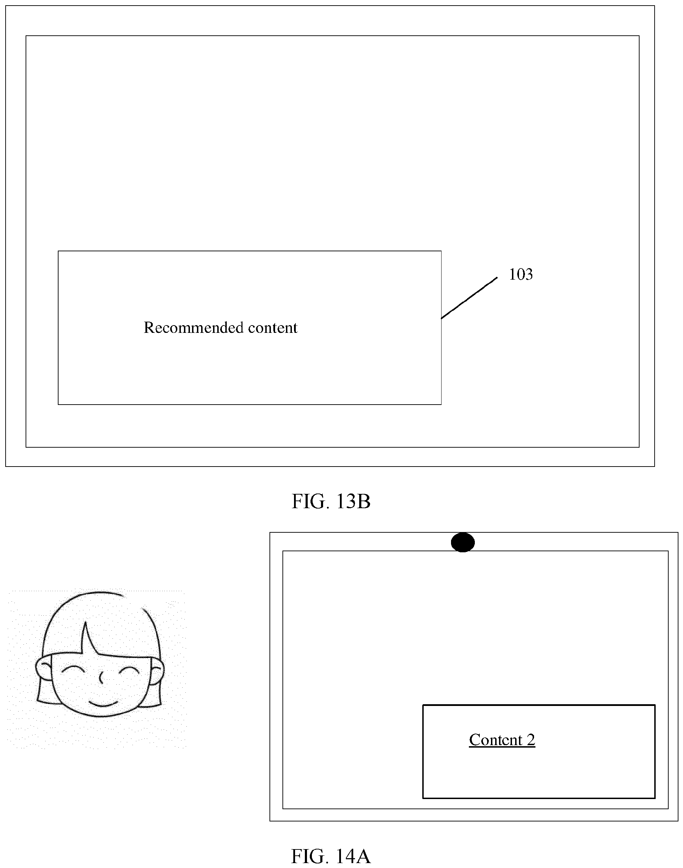

When the recommended content is displayed on an interface, if the target video frame includes a plurality of front face frames, the recommended content may be separately displayed based on the front face frames. For example, a region of a specific area is allocated to recommended content of each front face frame to display the corresponding recommended content. As shown in FIG. 13A, two front face frames are used as an example. A region 101 is used to display recommended content of a front face frame 1, and a region 102 is used to display recommended content of a front face frame 2. Alternatively, as shown in FIG. 13B, recommended content of all front face frames may be combined and displayed in a same region 103.

A manner of displaying the recommended content in each region is not limited in this embodiment of this application. For example, a name list of the recommended content may be displayed, so that a user selects, based on a name, content that is expected to be displayed on the electronic device; or if the recommended content is songs and videos such as the animations, the period dramas, or the like in Table 1, a part of video clips of each piece of recommended content may be sequentially played.

The following instances are provided.

For example, a correspondence shown in Table 1 is preset in the electronic device.

Refer to FIG. 14A. If the attribute information of the front face frame is young adults and female, and the emotion information is happy, content 2 may be filtered out and may be displayed in a corresponding region.

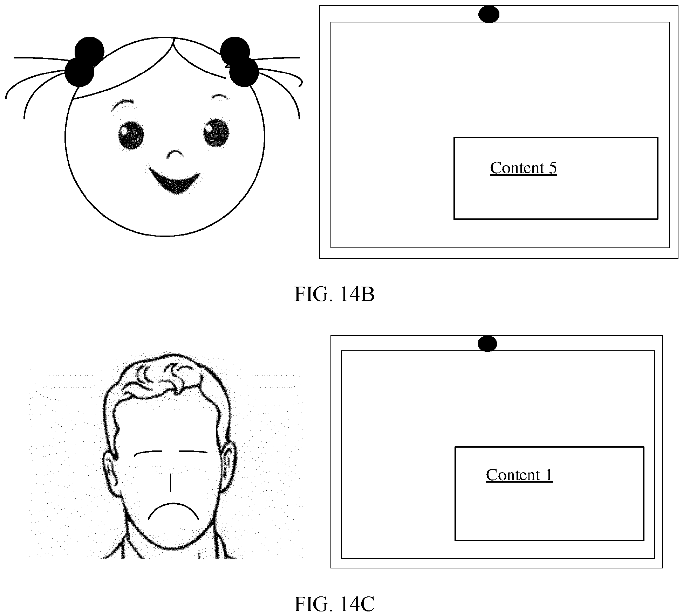

Refer to FIG. 14B. If the attribute information of the front face frame is middle-aged adults and male, and the emotion information is sad, content 1 may be filtered out and may be displayed in a corresponding region.

Refer to FIG. 14C. If the attribute information of the front face frame is children and female, and the emotion information is happy, content 5 may be filtered out and may be displayed in a corresponding region.

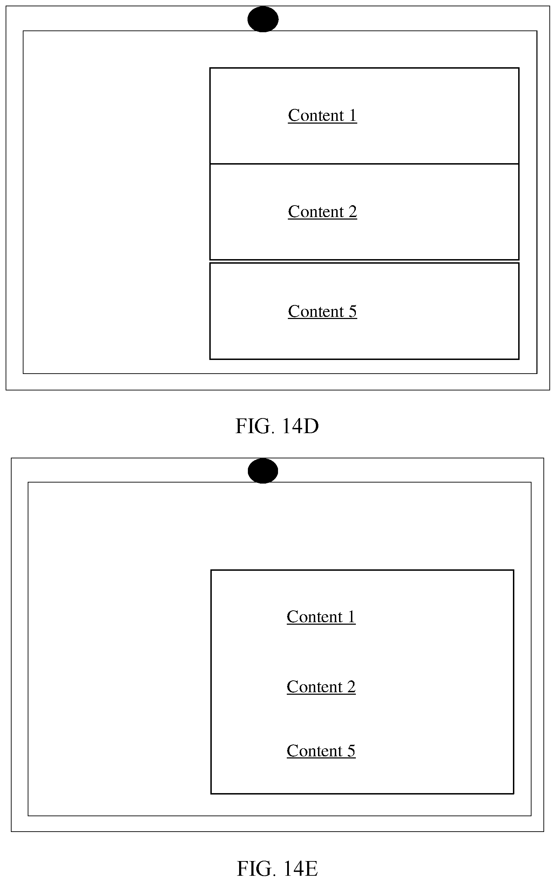

It should be noted that a quantity of pieces of content displayed in each region is not limited in this application, and one piece of content displayed in FIG. 14A to FIG. 14C is merely an example. In FIG. 14A to FIG. 14C, an example in which recommended content corresponding to only one front face frame is displayed in a region on the interface is used. Assuming that the electronic device simultaneously detects three front face frames shown in FIG. 14A to FIG. 14C, recommended content corresponding to one front face frame may be separately displayed in three regions with reference to the manner shown in FIG. 13A, as shown in FIG. 14D. Alternatively, recommended content corresponding to the three front face frames may be displayed in one region, as shown in FIG. 14E.

In the method shown in FIG. 12, content filtering is performed based on the attribute information and/or the emotion information of the front face frame, to obtain and display the recommended content of the front face frame. In this way, personalized recommendation for a user is implemented, the displayed recommended content is more targeted, interaction effect between the electronic device and the user is improved, and user experience is improved.

It may be understood that some or all of the steps or operations in the foregoing embodiments are merely examples. Other operations or variations of various operations may be performed in embodiments of this application. In addition, the steps may be performed in a sequence different from that presented in the foregoing embodiments, and not all operations in the foregoing embodiments may need to be performed.

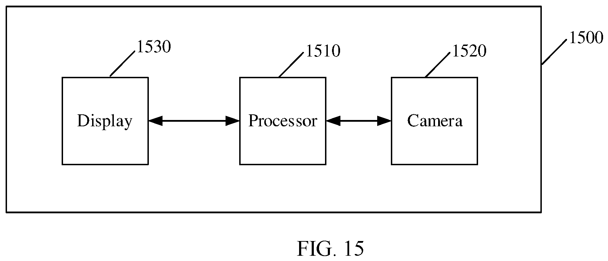

FIG. 15 is a diagram of a structure of an embodiment of an electronic device according to this application. As shown in FIG. 15, the electronic device 1500 may include a processor 1510, a camera 1520, and a display 1530.

The camera 1520 may be configured to capture a video stream.

In a possible implementation, the processor 1510 may be configured to: when it is detected that a front face image of a first user appears in the video stream, detect a gesture of the first user in the video stream; recognize an operation corresponding to the gesture; and perform the operation corresponding to the gesture. If the operation corresponding to performing the gesture includes displaying an image, a video, or the like, the processor 1510 may be further configured to control the display 1530 to display the image or the video corresponding to the operation.

The display 1530 may be configured to display an image, a video, or the like.

In another possible implementation, the processor 1510 may be configured to: when it is detected that a front face image of a first user appears in the video stream, detect a gesture of the first user in the video stream, and determine, based on the front face image of the first user, attribute information and/or emotion information of the first user, where the attribute information is used to record an attribute of the first user, and the emotion information is used to record an emotion of the first user; recognize that an operation corresponding to the gesture is a content recommendation operation; and display an interface corresponding to the content recommendation operation, where recommended content is displayed on the interface, and the recommended content is obtained based on the attribute information and/or the emotion information of the first user.

The display 1530 may be configured to display an interface corresponding to the gesture.

An embodiment of this application further provides a computer-readable storage medium. The computer-readable storage medium stores a computer program. When the computer program is run on a computer, the computer is enabled to perform the methods provided in embodiments shown in FIG. 5, FIG. 8, or FIG. 12 in this application.

An embodiment of this application further provides a computer program product. The computer program product includes a computer program. When the computer program is run on a computer, the computer is enabled to perform the methods provided in embodiments shown in FIG. 5, FIG. 8, or FIG. 12 in this application.

In embodiments of this application, "at least one" means one or more, and "a plurality of' means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items and a similar expression thereof refer to any combination of these items, including a single item or any combination of plural items. For example, at least one item of a, b, or c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments of this application, when any of the functions is implemented in a form of a software function unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or a compact disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A device control method, applied to an electronic device, comprising:
capturing a video stream;
when it is detected that a front face image of a first user appears in the video stream, detecting a gesture of the first user in the video stream;
recognizing an operation corresponding to the gesture; and
performing the operation corresponding to the gesture.

2. The method according to claim 1, wherein that it is detected that a front face image of a first user appears in the video stream comprises:
it is detected that consecutive target video frames in the video stream comprise the front face image of the first user.

3. The method according to claim 2, wherein that it is detected that consecutive target video frames in the video stream comprise the front face image of the first user comprises:
for each target video frame in the consecutive target video frames, obtaining a face image of the first user from the target video frame, calculating a yaw angle of the face image, and determining that the yaw angle is less than a preset first threshold.

4. The method according to claim 3, wherein that it is detected that consecutive target video frames in the video stream comprise the front face image of the first user further comprises:
calculating a pitch angle and/or a roll angle of the face image; and
determining that the pitch angle is less than a preset second threshold, and/or determining that the roll angle is less than a preset third threshold.

5. The method according to any one of claims 1 to 4, wherein before that it is detected that a front face image of a first user appears in the video stream, the method further comprises:
capturing a first image in response to a face setting instruction;
displaying the first image, and indicating a face image in the first image on the displayed first image; and
setting, in response to a face selection instruction, a face image indicated by the face selection instruction as the face image of the first user.

6. The method according to any one of claims 1 to 3, further comprising:
when it is detected that a front face image of a second user appears in the video stream, detecting a gesture of the second user in the video stream;
recognizing an operation corresponding to the gesture of the second user; and
performing the operation corresponding to the gesture of the second user.

7. The method according to claim 6, further comprising:
determining that the gesture of the first user and the gesture of the second user in the video stream are detected simultaneously, and selecting one gesture from the gesture of the first user and the gesture of the second user;
recognizing an operation corresponding to the selected gesture; and
performing the operation corresponding to the selected gesture.

8. The method according to any one of claims 2 to 4, wherein the detecting a gesture of the first user comprises:
detecting, from the consecutive target video frames that comprise the front face image of the first user, consecutive target video frames that comprise a hand image of the first user;
determining, based on the consecutive target video frames that comprise the hand image of the first user, a moving track of the hand image of the first user; and
determining, based on the moving track of the hand image of the first user, the gesture of the first user.

9. A device control method, applied to an electronic device, comprising:
capturing a video stream;
when it is detected that a front face image of a first user appears in the video stream, detecting a gesture of the first user in the video stream, and determining, based on the front face image of the first user, attribute information and/or emotion information of the first user, wherein the attribute information is used to record an attribute of the first user, and the emotion information is used to record an emotion of the first user;
recognizing an operation corresponding to the gesture; and
if the operation is a content recommendation operation, displaying an interface corresponding to the content recommendation operation, wherein recommended content is displayed on the interface, and the recommended content is obtained based on the attribute information and/or the emotion information of the first user.

10. The method according to claim 9, wherein before the displaying an interface corresponding to the content recommendation operation, the method further comprises:
sending the attribute information and/or the emotion information of the first user to a server; and
receiving first information that is sent by the server in response to the attribute information and/or the emotion information, wherein the first information comprises recommended content that matches the attribute information and/or the emotion information.

11. The method according to claim 9, wherein that it is detected that a front face image of a first user appears in the video stream comprises:
it is detected that consecutive target video frames in the video stream comprise the front face image of the first user.

12. The method according to claim 11, wherein that it is detected that consecutive target video frames in the video stream comprise the front face image of the first user comprises:
for each target video frame in the consecutive target video frames, obtaining a face image of the first user from the target video frame, calculating a yaw angle of the face image, and determining that the yaw angle is less than a preset first threshold.

13. The method according to claim 12, wherein that it is detected that consecutive target video frames in the video stream comprise the front face image of the first user further comprises:
calculating a pitch angle and/or a roll angle of the face image; and
determining that the pitch angle is less than a preset second threshold, and/or determining that the roll angle is less than a preset third threshold.

14. The method according to any one of claims 9 to 13, wherein before that it is detected that a front face image of a first user appears in the video stream, the method further comprises:
capturing a first image in response to a face setting instruction;
displaying the first image, and indicating a face image in the first image on the displayed first image; and
setting, in response to a face selection instruction, a face image indicated by the face selection instruction as the face image of the first user.

15. The method according to any one of claims 9 to 13, further comprising:
when it is detected that a front face image of a second user appears in the video stream, detecting a gesture of the second user in the video stream;
recognizing an operation corresponding to the gesture of the second user; and
performing the operation corresponding to the gesture of the second user.

16. The method according to claim 15, further comprising:
determining that the gesture of the first user and the gesture of the second user in the video stream are detected simultaneously, and selecting one gesture from the gesture of the first user and the gesture of the second user;
recognizing an operation corresponding to the selected gesture; and
performing the operation corresponding to the selected gesture.

17. The method according to any one of claims 11 to 13, wherein the detecting a gesture of the first user comprises:
detecting, from the consecutive target video frames that comprise the front face image of the first user, consecutive target video frames that comprise a hand image of the first user;
determining, based on the consecutive target video frames that comprise the hand image of the first user, a moving track of the hand image of the first user; and
determining, based on the moving track of the hand image of the first user, the gesture of the first user.

18. An electronic device, comprising a processor and a memory, wherein
the memory is configured to store a computer program, and when the processor executes the computer program, the electronic device is enabled to perform the method according to any one of claims 1 to 8.

19. An electronic device, comprising a processor and a memory, wherein
the memory is configured to store a computer program, and when the processor executes the computer program, the electronic device is enabled to perform the method according to any one of claims 9 to 17.

20. A computer-readable storage medium, wherein the computer-readable storage medium stores a computer program, and when the computer program runs on a computer, the computer is enabled to perform the method according to any one of claims 1 to 8.

21. A computer-readable storage medium, wherein the computer-readable storage medium stores a computer program, and when the computer program runs on a computer, the computer is enabled to perform the method according to any one of claims 9 to 17.
